(19) Europäisches Patentamt
European Patent Office
Office européen des brevets

(11) **EP 2 597 511 A1**

(12) **EUROPEAN PATENT APPLICATION**
published in accordance with Art. 153(4) EPC

(43) Date of publication:
**29.05.2013 Bulletin 2013/22**

(51) Int Cl.:
*G02F 1/1362* (2006.01)    *G02F 1/1368* (2006.01)
*G02F 1/133* (2006.01)    *G09G 3/36* (2006.01)

(21) Application number: **12778025.2**

(22) Date of filing: **13.08.2012**

(86) International application number:
**PCT/CN2012/080030**

(87) International publication number:
**WO 2013/040963 (28.03.2013 Gazette 2013/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2011 CN 201110284641**

(71) Applicant: **Boe Technology Group Co. Ltd.
Beijing 100015 (CN)**

(72) Inventors:
• **LV, Jing
Beijing 100176 (CN)**
• **PENG, Kuanjun
Beijing 100176 (CN)**
• **ZHANG, Yuting
Beijing 100176 (CN)**

(74) Representative: **Klunker . Schmitt-Nilson . Hirsch
Patentanwälte
Destouchesstrasse 68
80796 München (DE)**

(54) **TFT-LCD PANEL AND DRIVING METHOD THEREOF**

(57)    An embodiment of the present invention discloses a TFT-LCD panel and a driving method thereof, which meet the requirements of a pixel charging ratio and do not increase the logic power consumption of the panel at a high refresh frequency. The TFT-LCD panel comprises: a plurality of sub-pixel units defined by a plurality of rows of gate lines intersecting with a plurality of columns of data lines, each row of the gate lines being connected with one driver unit for providing gate-driving signal; on both sides of each column of sub-pixel units, there are arranged a first data line and a second data line respectively which provide data signals for that column of pixel units; two adjacent sub-pixel units in each column are connected with the first data line and the second data line respectively; every two driver units provide a same gate-driving signal, and one of the driver units is connected with an odd-numbered row of the gate lines, while the other driver unit is connected with an even-numbered row of the gate lines.

FIG.2

**Description**

TECHNICAL FIELD

Embodiments of the present invention are related to a Thin Film Transistor Liquid Crystal Display (TFT-LCD) panel and a driving method thereof.

BACKGROUND

With the development of TFT-LCD industry, competitions of TFT-LCD products are increasingly intensified, and therefore new technologies are adopted in the industry to reduce product costs and enhance competitiveness of the products in the market. A Gate Driver on Array (GOA) technology is a typical representative of these new technologies. The GOA technology integrates a gate driver unit on an array substrate to form a GOA unit, thus a Gate Driver Integrated Circuit (Gate Driver IC) section can be saved, and the purpose of reducing product costs can be achieved in two aspects: material costs and processing steps.

During research, the inventors note that at least the following problems are present in the existing GOA technology.

In the process of driving a panel, both GOA clock signals or (data) signals on data lines are both driven in the form of square wave, and therefore, the panel's logic power consumption can be presented and calculated with the formula as below:

$$[0005] \qquad P = (1/2)\, fCV^2$$

"P" represents power consumption (power), "f" represents the frequency of the clock pulse signal, "C" represents the value of a capacitor, and "V" represents the value of difference between the high level and the low level of the plus signal.

It can be seen from the above formula that, there is a directly proportional relationship between the power consumption of the GOA section and the frequency "f" of the clock pulse signal, in the case that the high level and the low level of the clock pulse signal are determined. For example, if the refresh frequency of the panel is changed from 60Hz to 120Hz, the power consumption of the GOA section will be increased by two times. For those panels which have specific requirements on logic power consumption, such changes sometimes may even lead to the failure of the product design.

Compared with the Complementary Metal Oxide Semiconductor (CMOS) technique adopted in the conventional Chip On Film (COF) method, the TFT technique is adopted in the GOA technology, and besides that the logic power consumption of the panel will be raised, the delay of the GOA signal is more than that in the COF method, thus charging ratio for pixels cannot be met when it is required to increase the refresh frequency of the panels.

SUMMARY

One of the technical problems to be solved by the embodiments of the present invention is to meet the requirements about a pixel charging ratio and not increase the logic power consumption of the panel at a high refresh frequency.

An embodiment of the present invention provides a thin film transistor liquid crystal display (TFT-LCD) panel, which comprises: a plurality of sub-pixel units defined by a plurality of rows of gate lines intersecting with a plurality of columns of data lines, each row of the gate lines being connected with one driver unit for providing a gate-driving signal; on both sides of each column of sub-pixel units, there are arranged a first data line and a second data line respectively which provide data signals for that column of pixel units; two adjacent sub-pixel units in each column are connected with the first data line and the second data line respectively; every two driver units provide a same gate-driving signal, and one of the driver units is connected with an odd-numbered row of the gate lines, while the other driver unit is connected with an even-numbered row of the gate lines.

For example, the two driver units providing the same gate-driving signal are connected with adjacent gate lines.

For example, the two driver units connected with the adjacent gate lines are located on both sides of the panel, respectively.

For example, the driver units are GOA units.

Another embodiment of the present invention provides a method of driving the above-described TFT-LCD panel for charging every sub-pixel unit on the panel, which comprises:

when a gate-driving signal arrives, the two driver units providing the same gate-driving signal drive the two rows of the gate lines connected thereto to be turned on simultaneously, and the first data line and the second data line arranged on both sides of each column of sub-pixel units charge the sub-pixel units connected thereto, respectively, so that the sub-pixel units connected with the two rows of the gate lines are charged simultaneously.

For example, the two driver units providing the same gate-driving signal are connected with adjacent gate lines.

For example, the driver units are GOA units.

For example, after adopting the technical schemes of the above-described embodiment, on both sides of each column of sub-pixel units, there are arranged the first data line and the second data line respectively which provide data signals for that column of pixel units; the two driver units (for example, GOA units) providing the same gate-driving signal are connected with two rows of the gate lines; when a gate-driving signal arrives, the two rows of the gate lines are turned on simultaneously, the first data line and the second data line charge the sub-pixel units connected thereto, respectively. Compared with the case of only the sub-pixel units connected with one row of the gate lines being charged, the TFT-LCD panel can not only increase the charging time of the pixels to improve the charging ratio of the pixels, but also reduce the clock pulse frequency on the panel to lower the logic power consumption of the panel.

BRIEF DESCRIPTION OF THE DRAWINGS

In order to clearly illustrate the technical solutions of the embodiments of the invention, the drawings of the embodiments will be briefly described in the following; it is obvious that the described drawings are only related to some embodiments of the invention and thus are not limitative of the invention.
FIG 1 is a schematic view of a TFT-LCD panel in the prior art; and
FIG 2 is a schematic view of a TFT-LCD panel described in an embodiment of the present invention.
Reference Numbers:
11- sub-pixel unit; 12- data line; 13- gate line; 14- GOA unit;
21- sub-pixel unit; 22- first data line; 23- second data line;
24- gate line; 25- GOA unit.

DETAILED DESCRIPTION

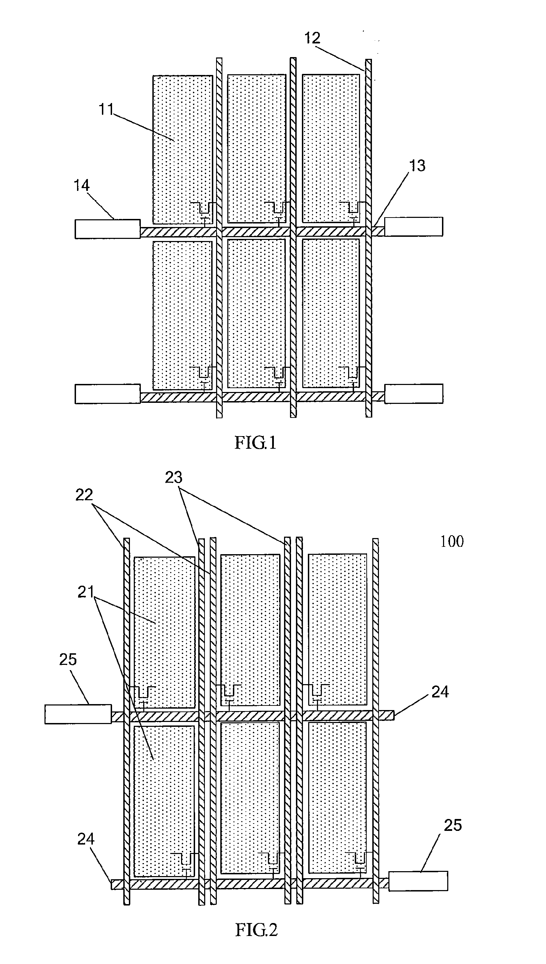

Hereinbelow, the TFT-LCD panel and the driving method thereof in the embodiments of the invention will be described in detail in connection with the accompanying drawings. The described embodiments are just a part but not all of the embodiments of the invention. Based on the described embodiments herein, those skilled in the art can obtain other embodiment(s), without any inventive work, which should be within the scope of the invention.
As shown in FIG. 2, a thin film transistor liquid crystal display (TFT-LCD) panel 100 is provided in an embodiment of the present invention. A plurality of sub-pixel units 21 are defined by a plurality of rows of gate lines 24 intersecting with a plurality of columns of data lines 22, 23, and each row of the gate lines 24 is connected with one GOA unit 25 which provides gate-driving signals. GOA unit 25 is an example of the driver unit in the present invention, which is integrated on the array substrate. In other embodiments of the present invention, other forms of the driver units such as COF also may be used.
On both sides of each column of sub-pixel units 21, there are arranged a first data line 22 and a second data line 23, respectively, which provide data signals for that column of pixel units. In the figure, the first data line 22 is on the left side of each column of the sub-pixel units, and the second data line 23 is on the right side of each column of the sub-pixel units.
Two adjacent sub-pixel units 21 in each column, that is, two adjacent sub-pixel units 21 along the vertical direction in the figure, are connected with the first data line 22 and the second data line 23, respectively.
Every two GOA unit 25 provides the same gate-driving signals, and one GOA unit of the two GOA units providing the same gate-driving signals is connected with an odd-numbered row of the gate lines, while the other GOA unit is connected with an even-numbered row of the gate lines. Here, the odd-numbered row of the gate lines and the even-numbered row of the gate lines may not be adjacent two gate lines, that is, they are not limited to the adjacent relationship as shown in FIG. 2.
The above-described two GOA units employs the same clock signals, and adopts the completely identical circuit design including clock signal's pulse width, instant of the rising edge, instant of the falling edge, and so on.
For the TFT-LCD panel 100 provided in the embodiment, on both sides of each column of sub-pixel units, there are arranged the first data line 22 and the second data line 23, respectively, which provide data signals for that column of pixel units. The two GOA units 25 providing the same gate-driving signals are connected with two rows of the gate lines 24; when a gate-driving signal arrives, the two rows of the gate lines 24 are turned on simultaneously, and the first data line 22 and the second data line 23 charge the sub-pixel units connected thereto, respectively. Compared with the case of only the sub-pixel units connected with one row of the gate lines being charged, the TFT-LCD panel of this embodiment can not only increase the charging time of the pixels to improve the charging ratio of the pixels, but also reduce the clock pulse frequency on the panel to lower the logic power consumption of the panel.
As shown in FIG. 2, in an example, the two GOA units 25 providing the same gate-driving signals are connected with adjacent gate lines 24. The two GOA unit 25 connected with the adjacent gate lines 24 are located on two sides of the panel, respectively, and for example in peripheral areas outside of the display region of the panel.
Since the two GOA units 25 providing the same gate-driving signals are connected with two adjacent rows of the gate lines 24, when a gate-driving signal arrives, the adjacent two rows of the gate lines 24 are simultaneously turned on, and the first data line 22 and the second data line 23 arranged on both sides of each column of sub-pixel units charge the sub-pixel units connected thereto, respectively, so that the sub-pixel units connected with the adjacent two rows of the gate lines 24 are charged simultaneously.
For example, when a display with resolution of 1440×RGB×900 works at a panel refresh frequency of 120Hz, for a progressive scanning technology, the maximum available charging time for one row is equal to the period divided by the number of scan lines, that is, $1 \div 120 \div = 900 = 9.25\mu s$; in contrast, as the TFT-LCD panel provided by the embodiment of the present invention can simultaneously drive two rows, the maximum available charging time is $1 \div 120 \div (900 \div 2) = 18.5\mu s$, which increases by two times compared with that of the progressive scanning, and the frequency of the clock signal pulse on the panel is $1 \div 18.5 = 54000Hz$, which decreases to a half compared with the frequency of the progressive scanning $1 \div 9.25 = 108000Hz$. Therefore, the use of the technical scheme, provided in the embodiment of the present invention, can not only improve the charging ratio of the pixels, but also reduce the logic power consumption of the panel.

Meanwhile, as shown in FIG. 2, when the above-described design schemes are adopted, each GOA unit 25, with its horizontal space unchanged, has a change in its vertical space from the original height of one sub-pixel unit to the present height of two sub-pixel units, and therefore, the available space for the above-described GOA unit 25 may increase by 2 times of the original one, thus more space is available for the peripheral circuit design such as common electrodes, clock signals, etc.

Also, an embodiment of the present invention provides a method of driving the TFT-LCD panel for charging every sub-pixel unit on the panel, the method comprises:

Step 101: when a gate-driving signal arrives, the two GOA units provided with the same gate-driving signal turn on simultaneously the two rows of the gate lines connected thereto, and the first data line and the second data line arranged on both sides of each column of sub-pixel units charge the sub-pixel units connected thereto, respectively, so that the sub-pixel units connected with the two rows of the gate lines are charged simultaneously.

In the process of driving the above-described panel, the above-described step 101 is repeated, and as the step-scanning proceeds, charging is completed for all rows of sub-pixel units on the panel. The specific process refers to the above-described embodiment, not repeated here for simplicity.

By simultaneously charging the sub-pixel units connected with two rows of the gate lines upon each gate-driving signal arriving, the charging ratio of pixels is improved, and the logic power consumption of the panel is reduced.

Further, in an example, the two GOA units providing the same gate-driving signal are connected with adjacent gate lines.

When a gate-driving signal arrives, the two GOA units 25 providing the same gate-driving signal turn on simultaneously the adjacent two rows of the gate lines 24 connected thereto, and the first data line 22 and the second data line 23 arranged on both sides of each column of sub-pixel units charge the sub-pixel units connected thereto, respectively. Compared with the case of only the sub-pixel units connected with one row of the gate lines being charged, the TFT-LCD panel of this embodiment can not only increase the charging time of the pixels to improve the charging ratio of the pixels, but also reduce the clock pulse frequency on the panel to lower the logic power consumption of the panel.

The above description is just the specific implementation of the present invention, but the scope of protection of the present invention is not limited thereto. Within the technical scope disclosed by the present invention, any modifications or alterations that are easily conceived by those skilled who are familiar with the art should be within the protection scope of the present invention. Therefore, the protection scope of the invention should be defined by the protection scope of the claims.

## Claims

1. A Thin Film Transistor Liquid Crystal Display (TFT-LCD) panel, comprising: a plurality of sub-pixel units defined by a plurality of rows of gate lines intersecting with a plurality of columns of data lines, each row of the gate lines connected with one driver unit for providing gate-driving signals,
   wherein on both sides of each column of sub-pixel units, there are arranged a first data line and a second data line respectively which provide data signals for that column of pixel units;
   two adjacent sub-pixel units in each column are connected with the first data line and the second data line respectively; and
   every two driver units provide a same gate-driving signal, and one of the driver units is connected with an odd-numbered row of the gate lines, while the other driver unit is connected with an even-numbered row of the gate lines.

2. The TFT-LCD panel according to Claim 1, wherein the two driver units providing the same gate-driving signal are connected with adjacent gate lines.

3. The TFT-LCD panel according to Claim 1 or 2, wherein the two driver units connected with the adjacent gate lines are located on both sides of the panel, respectively.

4. The TFT-LCD panel according to any one of Claims 1 to 3, wherein the driver units are GOA units.

5. A method of driving the Thin Film Transistor Liquid Crystal Display (TFT-LCD) panel according to Claim 1, for charging every sub-pixel unit on the panel, comprising:

   when a gate-driving signal arrives, the two driver units providing the same gate-driving signal turn on simultaneously the two rows of the gate lines connected thereto, and the first data line and the second data line arranged on both sides of each column of sub-pixel units charge the sub-pixel units connected thereto, respectively, so that the sub-pixel units connected with the two rows of the gate lines are charged simultaneously.

6. The method according to Claim 5, wherein the two driver units providing the same gate-driving signal are connected with adjacent gate lines.

7. The method according to Claim 5 or 6, wherein the driver units are GOA units.

8. The method according to any one of Claims 5 to 7, further comprising: repeating a scanning process until charging is completed for all rows of sub-pixel units on the panel.

FIG.1

FIG.2

# INTERNATIONAL SEARCH REPORT

| International application No. |
|---|
| **PCT/CN2012/080030** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G02F 1/-;G09G 3/-; H01L 27/-

Documentation searched other than minimum documentation to the extent that such documents are included in the fields searched

Electronic data base consulted during the international search (name of data base and, where practicable, search terms used)

WPI, EPODOC, CNPAT, CNKI: thin film transistor, TFT, liquid crystal display, LCD, driver, gate line, gate driver on array, GOA, pixel, data line, panel, two lines

**C. DOCUMENTS CONSIDERED TO BE RELEVANT**

| Category* | Citation of document, with indication, where appropriate, of the relevant passages | Relevant to claim No. |
|---|---|---|
| Y | CN 102073180 A (QUNKANG SCI&TECHNOLOGY SHENZHEN CO LTD et al.) 25 May 2011 (25.05.2011) description, paragraphs[0020]-[0031] and figure 3 | 1-8 |
| Y | US 2010/0053047 A1 （CHEN et al.） 04 March 2010 (04.03.2010) description, paragraphs[0024]-[0027] and figures 1 and 2 | 1-8 |
| A | CN 101825813 A (BEIJING BOE OPTOELECTRONICS TECHNOLOGY CO LTD) 08 September 2010 (08.09.2010) the whole document | 1-8 |

☐ Further documents are listed in the continuation of Box C.　　　☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&"document member of the same patent family | |

| Date of the actual completion of the international search | Date of mailing of the international search report |
|---|---|
| 09 October 2012 (09.10.2012) | 08 November 2012 (08.11.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>　　　　JIANG, Yujing<br><br>Telephone No. (86-10) 62411559 |
|---|---|

Form PCT/ISA /210 (second sheet) (July 2009)

## INTERNATIONAL SEARCH REPORT
### Information on patent family members

| International application No. |
| --- |
| **PCT/CN2012/080030** |

| Patent Documents referred in the Report | Publication Date | Patent Family | Publication Date |
| --- | --- | --- | --- |
| CN 102073180 A | 25.05.2011 | CN 102073180 B | 30.05.2012 |
|  |  | US 2011/0122055 A1 | 26.05.2011 |
| US 2010/0053047 A1 | 04.03.2010 | TWI 334124 B | 01.12.2010 |
|  |  | TW 201009789 A | 01.03.2010 |
| CN 101825813 A | 08.09.2010 | CN 101825813 B | 14.12.2011 |

Form PCT/ISA/210 (patent family annex) (July 2009)

**INTERNATIONAL SEARCH REPORT**

International application No.

**PCT/CN2012/080030**

Continuation of : A.   CLASSIFICATION OF SUBJECT MATTER

G02F 1/1362 (2006.01)i
G02F 1/1368 (2006.01)i
G02F 1/133 (2006.01)i
G09G 3/36 (2006.01)n